# EUROPEAN PATENT APPLICATION

(11) **EP 4 137 413 A1**
(43) Date of publication of application: **22.02.2023**
(21) Application number: 22191097.9
(22) Date of filing: 18.08.2022
(51) Int. Cl.: B64D 31/00

(54) **METHOD AND SYSTEM FOR OPERATING AN AIRCRAFT HAVING A TURBOPROP ENGINE**

(30) Priority: 19.08.2021 US 202117406436
(71) Applicant: PRATT & WHITNEY CANADA CORP., Longueuil, Québec J4G 1A1 (CA)
(72) Inventor: HUFF, Eric, (01BE5) Longueuil, J4G 1A1 (CA)
(74) Representative: Dehns

(57) **Abstract**

Methods, systems, and assemblies for operating an aircraft having a turboprop engine are described. The method comprises obtaining a measured torque (502) of the turboprop engine from a mechanical torque piston measurement system and displaying the measured torque (506) in a cockpit of the aircraft. During operation of the turboprop engine, a torque measurement saturation condition of the torque piston measurement system is monitored (504) to detect when the torque piston measurement system is outside of an operating range. A synthesized torque of the turboprop engine is determined based on one or more actual engine operating parameters of the turboprop engine. In response to detecting that the torque piston measurement system is outside of the operating range, the synthesized torque is displayed (508) in the cockpit of the aircraft.

## Description

### TECHNICAL FIELD

The application relates generally to aircraft engines and, more particularly, to turboprop engines having mechanical torque measurement systems.

### BACKGROUND OF THE ART

Certain aircraft and engines that predate electronic engine controllers lay more responsibility on the pilot to control the engine. In this case, providing accurate and up to date information regarding engine parameters to the pilot via the cockpit display is critical. Therefore, improvements are needed.

### SUMMARY

In one aspect, there is provided a method for operating an aircraft having a turboprop engine. The method comprises obtaining, during operation of the turboprop engine, a measured torque of the turboprop engine from a mechanical torque piston measurement system and generating a signal to cause an indication of the measured torque to be displayed in a cockpit of the aircraft. During operation of the turboprop engine, a torque measurement saturation condition of the torque piston measurement system is monitored to detect when the torque piston measurement system is outside of an operating range associated with the torque piston measurement system. A synthesized torque of the turboprop engine is determined based on one or more actual engine operating parameters of the turboprop engine. In response to detecting that the torque piston measurement system is outside of the operating range, a signal is generated to cause an indication of the synthesized torque to be displayed in the cockpit of the aircraft.

In another aspect, there is provided an aircraft assembly comprising a turboprop engine, a mechanical torque piston measurement system coupled to the turboprop engine, a cockpit display, and a synthesized torque calculator coupled to the mechanical torque piston measurement system, the turboprop engine, and the cockpit display. The synthesized torque calculator is configured for obtaining a measured torque of the turboprop engine from the mechanical torque piston measurement system and generating a signal to cause an indication of the measured torque to be displayed on the cockpit display of the aircraft; monitoring a torque measurement saturation condition of the torque piston measurement system to detect when the torque piston measurement system is outside of an operating range associated with the torque piston measurement system; determining a synthesized torque of the turboprop engine based on one or more actual engine operating parameters of the turboprop engine; and in response to detecting that the torque piston measurement system is outside of the operating range, generating a signal to cause an indication of the synthesized torque to be displayed on the cockpit display of the aircraft.

In yet another aspect, there is provided a system for operating an aircraft having a turboprop engine. The system comprises a processor and a non-transitory computer-readable medium having stored thereon program instructions. The program instructions are executable by the processor for obtaining a measured torque of the turboprop engine from the mechanical torque piston measurement system and generating a signal to cause an indication of the measured torque to be displayed on the cockpit display of the aircraft; monitoring a torque measurement saturation condition of the torque piston measurement system to detect when the torque piston measurement system is outside of an operating range associated with the torque piston measurement system; determining a synthesized torque of the turboprop engine based on one or more actual engine operating parameters of the turboprop engine; and in response to detecting that the torque piston measurement system is outside of the operating range, generating a signal to cause an indication of the synthesized torque to be displayed on the cockpit display of the aircraft. The program instructions may be executable by the processor to perform the method of any of claims 1 to 7.

Features of the systems, devices, and methods described herein may be used in various combinations, in accordance with the embodiments described herein.

### DESCRIPTION OF THE DRAWINGS

Reference is now made to the accompanying figures in which:
Fig. 1 is a schematic cross sectional view of a gas turbine engine;
Fig. 2A is a three dimensional exploded view of a reduction gearbox of the gas turbine engine of Fig. 1;
Fig. 2B is a schematic cutaway view of a torque measuring system of the gearbox of Fig. 2A, the torque measuring system shown in a low power configuration;
Fig. 2C is a schematic cutaway view of the torque measuring system of Fig. 2B shown in a high power configuration;
Fig. 3 is a graph illustrating a variation of a displayed torque as a function of an actual torque of the gas turbine engine of Fig. 1;
Fig. 4 is a block diagram of an aircraft assembly;
Fig. 5 is a flowchart of an example method of operating an aircraft having a turboprop engine; and
Fig. 6 is a block diagram of an example computing device.

It will be noted that throughout the appended drawings, like features are identified by like reference numerals.

### DETAILED DESCRIPTION

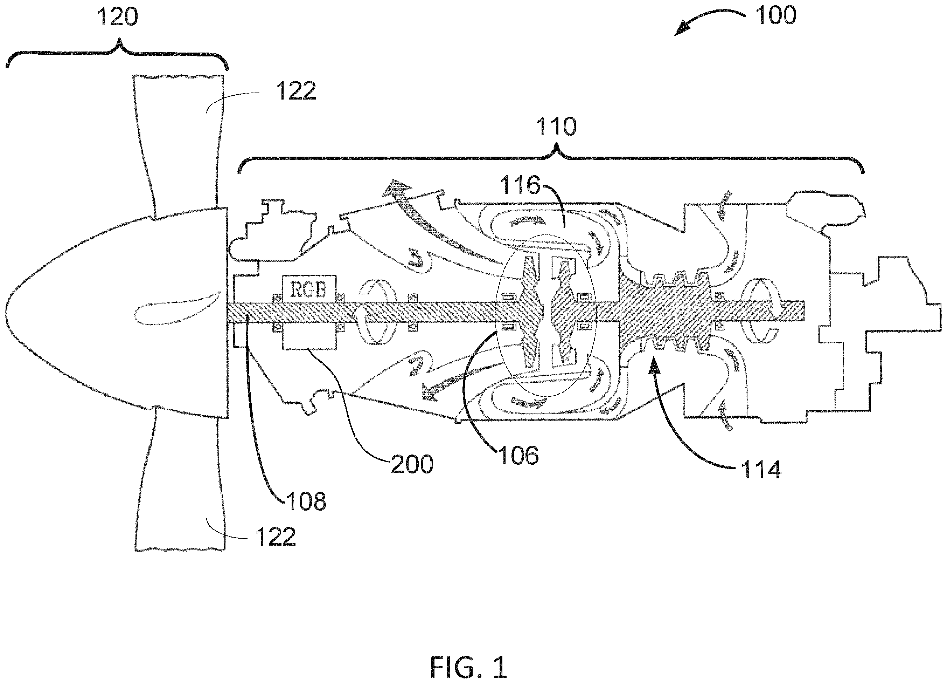

Fig. 1 illustrates a powerplant 100 for an aircraft of a type provided for use in subsonic flight, generally comprising an engine 110 and a propeller 120. The powerplant 100 generally comprises in serial flow communication the propeller 120 attached to a shaft 108 and through which ambient air is propelled, a compressor section 114 for pressurizing the air, a combustor 116 in which the compressed air is mixed with fuel and ignited for generating an annular stream of hot combustion gases, and a turbine section 106 for extracting energy from the combustion gases. The propeller 120 converts rotary motion from the shaft 108 of the engine 110 to provide propulsive force for the aircraft, also known as thrust. The propeller 120 comprises two or more propeller blades 122. A blade angle of the propeller blades 122 may be adjusted. The blade angle may be referred to as a beta angle, an angle of attack or a blade pitch. The powerplant 100 may be implemented to comprise a single or multi-spool gas turbine engine, where the turbine section 106 is connected to the propeller 120 through a reduction gearbox (RGB) 200.

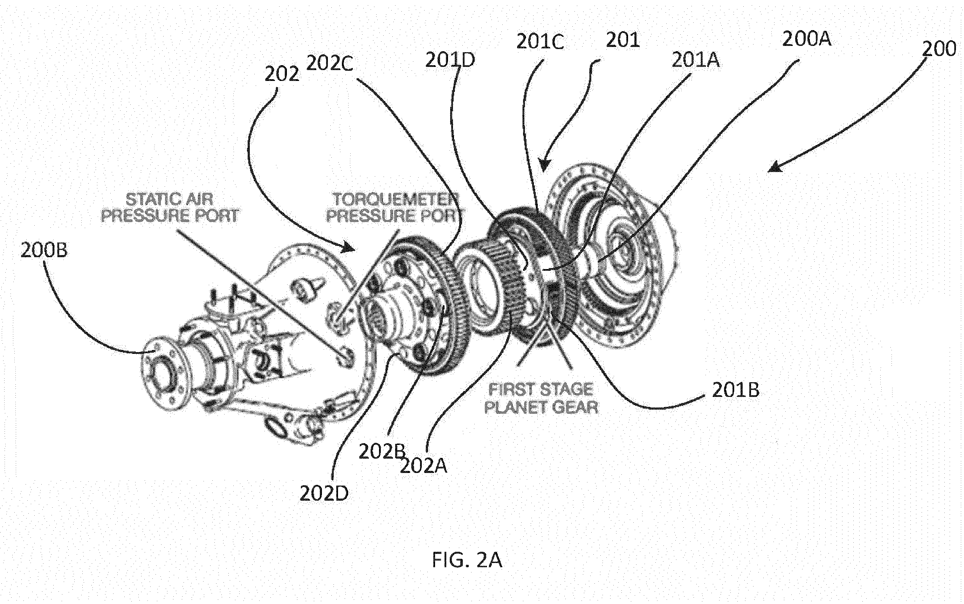

Referring now to Fig. 2A, the reduction gearbox 200 is described in more detail. The reduction gearbox 200 includes a first planetary gear train 201 and a second planetary gear train 202. The first and second planetary gear trains 201, 202 are disposed in series and drivingly engaged to one another. The reduction gearbox 200 has an input 200A and an output 200B. The input 200A is drivingly engaged by a shaft (e.g., low-pressure shaft) of the powerplant 100. The output 200B drivingly engages the propeller 120. Hence, the low-pressure shaft of the powerplant 100 is in driving engagement with the propeller 120 through the reduction gearbox 200.

The first planetary gear train 201 includes a first sun gear 201A, first planet gears 201B meshed with the first sun gear 201A, and a first ring gear 201C meshed with the first planet gears 201B. The first planet gears 201B are rollingly supported by a first planet carrier 201D. In the present embodiment, the input 200A of the RGB 200 is connected to the first sun gear 201A and rotation of the first ring gear 201C is blocked. Hence, an output of the first planetary gear train 201 corresponds to the first planet carrier 201D.

The second planetary gear train 202 includes a second sun gear 202A, second planet gears 202B meshed with the second sun gear 202A, and a second ring gear 202C meshed with the second planet gears 202B. The second planet gears 202B are rollingly supported by a second planet carrier 202D. In the present embodiment, the output 200B of the RGB 200 is connected to the second planet carrier 201D and rotation of the second ring gear 202C is blocked. The second sun gear 202A is drivingly engaged by the first planet carrier 201D of the first planetary gear train 201.

The RGB 200 includes a torque measuring system 210 for mechanically measuring a torque generated by the powerplant 100. This measured torque may be displayed to a pilot of an aircraft equipped with the powerplant 100. In the embodiment shown, the torque measuring system 210 relies on oil pressure and may be operatively coupled to the first planetary gear train 201, but may alternatively be coupled to the second planetary gear train 202.

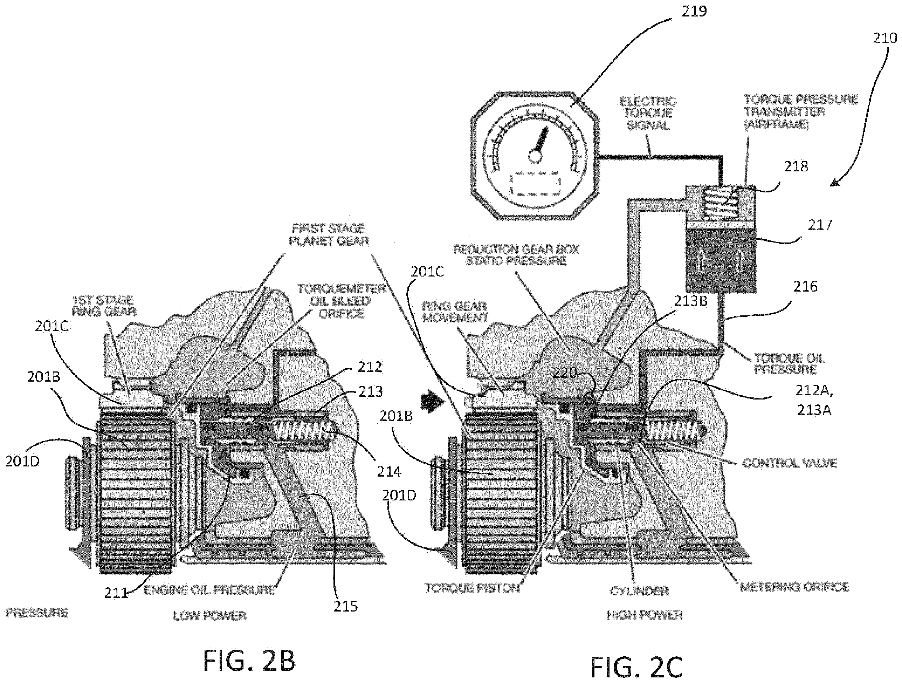

Referring to Figs. 2B and 2C, in the depicted embodiment, the first ring gear 201C is movable along an axial direction relative to its central axis. A suitable connection between the first ring gear 201C and a housing of the RGB 200 that blocks rotation of the first ring gear 201C, but that allows translation of the first ring gear 201C, is used. As shown in Figs. 2A, 2B, when the torque is increased, the first ring gear 201C is moved axially rearward (toward the right in Fig. 2B). This movement may be created by engaged teeth of the first ring gear 201C and of the first planet gears 201B that may be angled (i.e., non-parallel to the central axis of the first ring gear 201C).

The torque measuring system 210 includes a torque piston 211 that is in abutment against the first ring gear 201C. The torque piston 211 is movable along the axial direction as shown in Figs. 2B, 2C and follows movements of the first ring gear 201C. The torque piston 211 has a hollow shaft portion 212 that rides inside a cylinder 213 against a biasing member 214, such as a spring. The hollow shaft portion 212 defines a first orifice 212A and the cylinder 213 defines a second orifice 213A. In use, when the torque is increased, the first ring gear 201C moves axially and pushes on the torque piston 212 that in turn compresses the biasing member 214. This movement of the hollow shaft portion 212 moves the first and second orifices 212A, 213A toward one another to increase a flow circulating area via which engine oil flows from an oil conduit 215 towards an interior of the hollow shaft portion 212 via the first and second orifices 212A, 213A. The oil conduit 215 is part of an oil system of the powerplant 100 that circulates oil for lubricating purposes.

In use, the greater the torque generated by the power plant 100, the more aligned are the first and second orifices 212A, 213A and the greater the oil flow rate through the hollow shaft portion 212. The oil that reaches the hollow shaft portion then flows through third orifices 213B defined by the hollow shaft portion 213 and reaches a second oil conduit 216. The oil flowing in the second oil conduit 216 increases a pressure inside a chamber 217 to counteract a biasing force exerted by a second biasing member 218. The second biasing member 218 is herein a spring, but any other pressure sensitive member may be used such as a piezo electric element. The pressure exerted against the second biasing member 218 may be translated into a torque value that may be displayed to the pilot via any suitable displaying device 219. For the purpose of keeping the oil flowing in the system, a metered orifice 220 is used to allow some of the oil flowing through the torque piston 212 to leak out therefrom. This oil may then be scavenged and flown back to an oil tank from where it may be circulated again in the oil system.

When the torque generated by the powerplant 100 decreases, the biasing member 214 pushes against the torque piston, which in turn pushes against the first ring gear 201C to move it back towards its baseline position depicted in Fig. 2B. At which point, the two orifices 212A, 213A become offset from one another.

Therefore, as the torque increases, the first ring gear 201C is moved more and more rearward thereby compressing the biasing member 214 and bringing the first and second orifices 212A, 213A in alignment to increase a flow circulating area therethrough. This results in an increase of an oil flow rate flowing from the oil conduit 215 in the second oil conduit 216 through the hollow shaft portion 213 of the torque piston 212. This in turn increases the pressure of the oil that reaches the chamber 217 and increases a force against the second biasing member 218. This force may then be translated into a torque value.

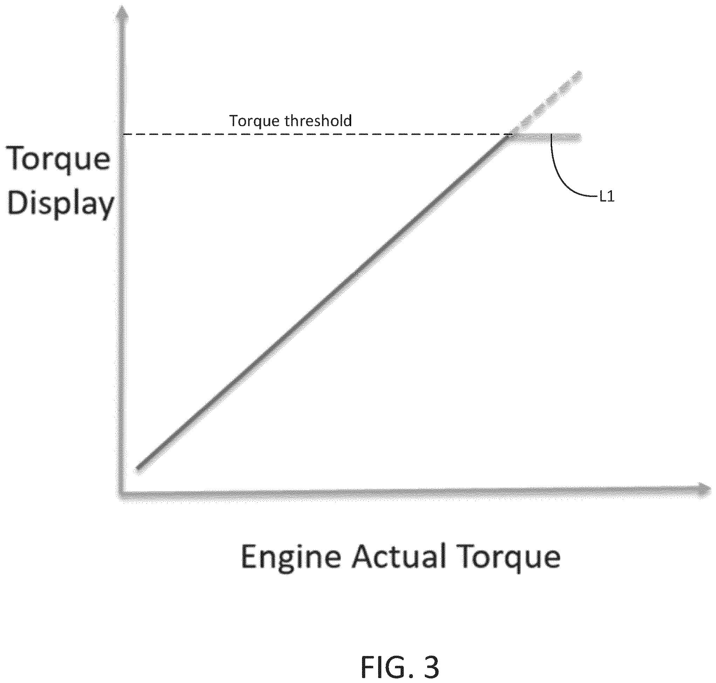

Referring now to Fig. 3, it was observed that beyond a given torque threshold, an oil pressure inside the chamber 217 no longer increases whereas the torque generated by the powerplant 100 may increase. At this point, the displayed torque, depicted as line L1 in Fig. 3, may remain constant and the actual torque generated by the powerplant 100 may be greater than the displayed torque. This situation is undesirable.

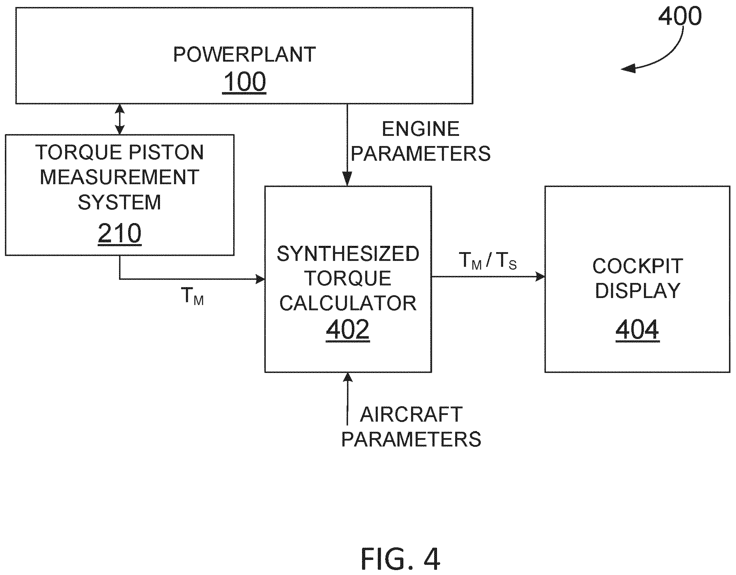

With reference to Fig. 4, there is provided an aircraft assembly 400 for addressing the above-described situation. The torque piston measurement system 210 is coupled to the powerplant 100. A synthesized torque calculator 402 is coupled between the powerplant 100, the torque piston measurement system 210, and an aircraft cockpit display 404. It will be understood that the aircraft cockpit display 404 may be embodied in various manners, such as but not limited to a set of needles, gauges, switches, lights, and the like found on older aircraft. In some embodiments, the cockpit display 404 does not include electronic display components and screens. In some embodiments, the cockpit display 404 is a combination of non-electronic components and electronic components. In some embodiments, the cockpit display 404 is composed mainly of electronic display components and screens.

The synthesized torque calculator 402 is configured for detecting a torque measurement saturation condition of the torque piston measurement system 210. A saturation condition is detected when the actual torque of the powerplant 100 is outside of an operating range of the torque piston measurement system 210. In some embodiments, the measured torque Tₘ is compared to a synthesized torque Tₛ to detect the saturation condition. When Tₘ differs from Tₛ by more than an acceptable error, the saturation condition is detected. In such circumstances, the synthesized torque calculator 402 causes the synthesized torque Tₛ to be displayed on the cockpit display 404. The synthesized torque Tₛ may be displayed instead of the measured torque Tₘ or in addition thereto, on a same or different cockpit display 404 or region of the cockpit display 404. In some embodiments, an average value between the synthesized torque Tₛ and the measured torque Tₘ is displayed. In some embodiments, the highest one of the synthesized torque Tₛ and the measured torque Tₘ is displayed.

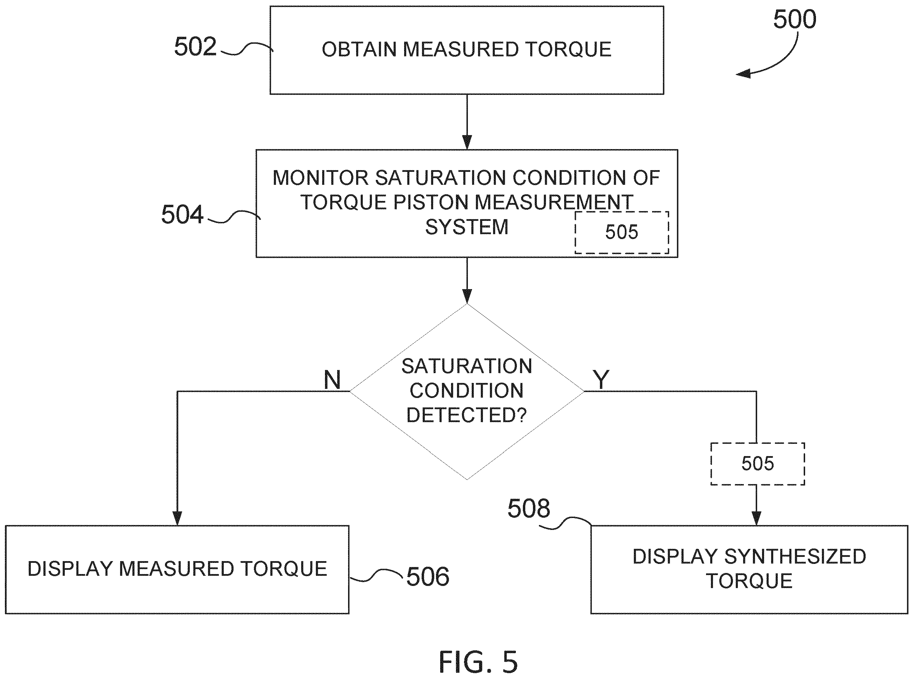

Operation of the synthesized torque calculator 402 is shown in the example method 500 of Fig. 5. Upon receipt of the measured torque at step 502, a saturation condition is monitored at step 504. In some embodiments, the saturation condition is monitored directly from the torque, using the measured torque and a synthesized or estimated torque. In such cases, a synthesized torque is determined at step 505 based on one or more actual engine operating parameters of the turboprop engine. Any known or other methods for estimating a torque of a turboprop engine in absence of a torque measurement may be used. In some embodiments, an expected torque is predetermined from testing, simulations, and/or modeling of the powerplant 100 using various engine and/or aircraft parameters and stored locally. Determining the synthesized torque at step 505 may thus comprise retrieving an expected torque in accordance with actual engine and/or aircraft parameters, and the expected torque then acts as the synthesized torque Tₛ. In some embodiments, the synthesized torque is calculated using the engine and/or aircraft parameters, such as engine fuel flow (W_{f}), Inter Turbine Temperature (ITT), and gas generator speed (Ng). A gross estimate for torque may be used when precision is not required, whereas more complex techniques and/or algorithms may be used for a more precise determination of the synthesized torque.

In some embodiments, the saturation condition is monitored using non-torque parameters from the powerplant 100 and/or the torque piston measurement system 210. For example, the synthesized torque calculator 402 may also receive a torque piston differential pressure (TPDP) from the torque piston measurement system 210, and use the TPDP to detect the saturation condition. The TPDP corresponds to a difference between pressure at or around the chamber 217 and the pressure at or around the metered orifice 220, and it may be compared to a reference value associated with a limit of an operating range of TPDP for the torque piston measurement system 210 and when the reference value is exceeded, a saturation condition is detected. In some embodiments, the main oil pressure (MOP) and/or main oil temperature (MOT) of the powerplant 100 may also be used to monitor the saturation condition. For example, threshold(s) for MOP and/or MOT may be associated with the operating range of the torque piston measurement system 210, such that when the MOP/MOT threshold(s) are exceeded, the saturation condition is detected. A combination of various engine, aircraft, and torque system parameters may also be used. Other embodiments for detecting the saturation condition are also contemplated.

When no saturation condition is detected, the measured torque T_{M} is displayed on the cockpit display 404 at step 506. When the saturation condition is detected, the synthesized torque Tₛ is displayed on the cockpit display 404 at step 508. In some embodiments, the synthesized torque is determined at step 505 in response to detecting the saturation condition, and thus step 505 may be performed prior to display of the synthesized torque at step 508. This embodiment may result in power savings, as the synthesized torque only needs to be calculated when it is to be displayed.

In some embodiments, the cockpit display 404 will switch from measured to synthesized torque when operating the powerplant 100 above the operating range of the torque piston measurement system 210. In some embodiments, the cockpit display 404 will additionally display the synthesized torque when operating the powerplant 100 above the operating range of the torque piston measurement system 210. Additional visual cues, such as color, symbols, and the like, may be used to inform the pilot that the displayed torque no longer corresponds to a measured torque but instead corresponds to a synthesized torque. Indeed, in some cases, the measurement capability of the torque piston measurement system 210 is exceeded when the pilot adds too much fuel to the engine, for example via an Emergency Power Lever. Therefore, providing the visual cues to the pilot in response to this action may inform the subsequent actions from the pilot.

It will be understood that the features disclosed herein are particularly suitable in cases when there is no engine controller (i.e. full-authority digital engine controls (FADEC) or other similar device, including electronic engine control (EEC), engine control unit (ECU), electronic propeller control, propeller control unit, and the like) to control fuel flow to the engine and this responsibility lies with the pilot. In such cases, the torque display on the cockpit display 404 is critical to the pilot and reaching the mechanical limit of the system can have important repercussions. The proposed aircraft assembly 400 and method 500 mitigate the effects by ensuring continuity in torque display despite the mechanical limits of the torque piston measurement system 210.

In some embodiments, statistics related to the display of synthesized torque are recorded, for example by the synthesized torque calculator 402. In some embodiments, every instance of a saturation condition is recorded, with its duration and/or magnitude of synthesized torque. These statistics may be used post-flight to assist maintenance staff in estimating the needed maintenance action of the powerplant 100 and/or torque piston measurement system 210.

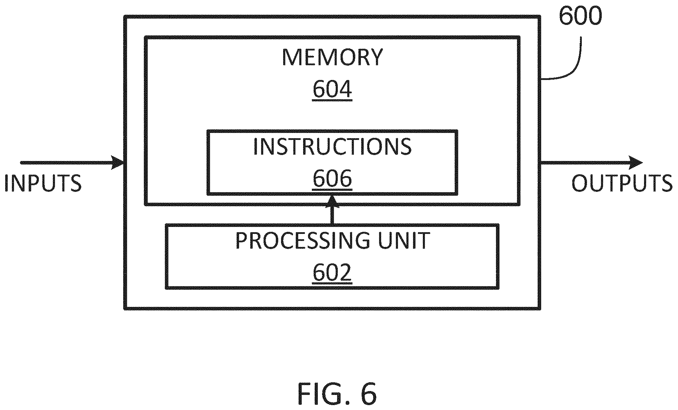

Any suitable electronic device may be used for the synthesized torque calculator 402. Although illustrated as a single device, the synthesized torque calculator 402 may be composed of a plurality of electronic devices and/or components which together perform the functions described herein for the synthesized torque calculator 402. In some embodiments, the synthesized torque calculator 402 is embodied by a computing device 600, as shown in the example of Fig. 6. The computing device 600 may be a dedicated computer or may form part of the aircraft avionics. Although a single computing device 600 is illustrated, two or more computing devices 600 may cooperate together to perform the functions of the synthesized torque calculator 402. For example, in some embodiments, a portion of the functions of the synthesized torque calculator 402 are performed in aircraft avionics and one or more other function is performed by a dedicated electronic device.

The computing device 600 comprises a processing unit 602 and a memory 604 which has stored therein computer-executable instructions 606. The processing unit 602 may comprise any suitable devices configured to implement the method 500 such that instructions 606, when executed by the computing device 600 or other programmable apparatus, may cause the functions/acts/steps performed as part of the method 500 as described herein to be executed. The processing unit 602 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 604 may comprise any suitable known or other machine-readable storage medium. The memory 604 may comprise non-transitory computer readable storage medium, for example, but not limited to, an electronic, magnetic, optical, electromagnetic, infrared, or semiconductor system, apparatus, or device, or any suitable combination of the foregoing. The memory 604 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 604 may comprise any storage means (e.g., devices) suitable for retrievably storing machine-readable instructions 606 executable by processing unit 602.

The method 500 described herein may be implemented in a high level procedural or object oriented programming or scripting language, or a combination thereof, to communicate with or assist in the operation of a computer system, for example the computing device 600. Alternatively, the method 500 may be implemented in assembly or machine language. The language may be a compiled or interpreted language. Program code for implementing the method 500 may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the method 500 may also be considered to be implemented by way of a non-transitory computer-readable storage medium having a computer program stored thereon. The computer program may comprise computer-readable instructions which cause a computer, or more specifically the processing unit 602 of the computing device 600, to operate in a specific and predefined manner to perform the functions described herein, for example those described in the method 500.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, the synthesized torque calculator may be composed of electronic components without an actual processor. Yet further modifications could be implemented by a person of ordinary skill in the art in view of the present disclosure, which modifications would be within the scope of the present technology.

## Claims

1. A method (500) for operating an aircraft having a turboprop engine (100), the method comprising:
obtaining (502), during operation of the turboprop engine (100), a measured torque (Tₘ) of the turboprop engine (100) from a mechanical torque piston measurement system (210) and generating a signal to cause an indication of the measured torque to be displayed in a cockpit (404) of the aircraft;
monitoring (504), during operation of the turboprop engine (100), a torque measurement saturation condition of the torque piston measurement system (210) to detect when the torque piston measurement system (210) is outside of an operating range associated with the torque piston measurement system (210);
determining (505), during operation of the turboprop engine (100), a synthesized torque (Tₛ) of the turboprop engine (100) based on one or more actual engine operating parameters of the turboprop engine (100); and
in response to detecting that the torque piston measurement system (210) is outside of the operating range, generating (508) a signal to cause an indication of the synthesized torque to be displayed in the cockpit (404) of the aircraft.

2. The method (500) of claim 1, wherein the determining of the synthesized torque is executed in response to the detecting that the torque piston measurement system (210) is outside of the operating range.

3. The method (500) of claims 1 or 2, wherein the determining of the synthesized torque is executed via avionics of the aircraft.

4. The method (500) of any of claims 1 to 3, wherein the turboprop engine operates in absence of an engine computer and fuel to the turboprop engine (100) is adjusted manually by a pilot.

5. The method (500) of any preceding claim, wherein the monitoring of the torque measurement saturation condition comprises:
comparing the measured torque to the synthesized torque; or
comparing one or more non-torque parameter of at least one of the turboprop engine (100) and the torque piston measurement system (210) to at least one reference value associated with a limit of the operating range of the torque piston measurement system (210).

6. The method (500) of any preceding claim, wherein the synthesized torque is displayed in the cockpit (404) of the aircraft:
instead of the measured torque; or
concurrently with the measured torque.

7. The method (500) of any preceding claim, further comprising recording a duration and a magnitude of the synthesized torque when displayed.

8. An aircraft assembly (400) comprising:
a turboprop engine (100);
a mechanical torque piston measurement system (210) coupled to the turboprop engine (100);
a cockpit display (404); and
a synthesized torque calculator (402) coupled to the mechanical torque piston measurement system (210), the turboprop engine (100), and the cockpit display (404) and configured for:
obtaining a measured torque (Tₘ) of the turboprop engine (100) from the mechanical torque piston measurement system (210) and generating a signal to cause an indication of the measured torque to be displayed on the cockpit (404) display of the aircraft;
monitoring (504) a torque measurement saturation condition of the torque piston measurement system (210) to detect when the torque piston measurement system (210) is outside of an operating range associated with the torque piston measurement system (210);
determining a synthesized torque (Tₛ) of the turboprop engine (100) based on one or more actual engine operating parameters of the turboprop engine (100); and
in response to detecting that the torque piston measurement system (210) is outside of the operating range, generating a signal to cause an indication of the synthesized torque to be displayed (508) on the cockpit display of the aircraft.

9. The aircraft assembly of claim 8, wherein the determining of the synthesized torque is executed:
in response to the detecting that the torque piston measurement system (210) is outside of the operating range; and/or
via avionics of the aircraft.

10. The aircraft assembly of claims 8 or 9, wherein the turboprop engine (100) operates in absence of an engine computer and fuel to the turboprop engine (100) is adjusted manually by a pilot.

11. The aircraft assembly of any of claims 8 to 10, wherein the monitoring (504) of the torque measurement saturation condition comprises one of:
comparing the measured torque to the synthesized torque; and
comparing one or more non-torque parameter of at least one of the turboprop engine (100) and the torque piston measurement system (210) to at least one reference value associated with a limit of the operating range of the torque piston measurement system (210).

12. The aircraft assembly of any of claims 8 to 11, wherein the synthesized torque is displayed on the cockpit display (404) of the aircraft:
instead of the measured torque; or
concurrently with the measured torque.

13. The aircraft assembly of any of claims 8 to 12 wherein the synthesized torque calculator (402) is further configured for recording a duration and a magnitude of the synthesized torque when displayed (404).

14. A system for operating an aircraft having a turboprop engine (100), the system comprising:
a processor (602); and
a non-transitory computer-readable medium (604) having stored thereon program instructions (606) executable by the processor for:
obtaining, during operation of the turboprop engine (100), a measured torque (Tₘ) of the turboprop engine (100) from a mechanical torque piston measurement system (210) and generating a signal to cause an indication of the measured torque to be displayed in a cockpit (404) of the aircraft;
monitoring, during operation of the turboprop engine (100), a torque measurement saturation condition of the torque piston measurement system (210) to detect when the torque piston measurement system (210) is outside of an operating range associated with the torque piston measurement system (210);
determining, during operation of the turboprop engine (100), a synthesized torque (Tₛ) of the turboprop engine (100) based on one or more actual engine operating parameters of the turboprop engine (100); and
in response to detecting that the torque piston measurement system (210) is outside of the operating range, generating a signal to cause an indication of the synthesized torque to be displayed in the cockpit (404) of the aircraft.

15. The system of claim 14, wherein the monitoring (504) of the torque measurement saturation condition comprises comparing the measured torque to the synthesized torque.
